# EUROPÄISCHE PATENTSCHRIFT

(11) **EP 3 539 841 B1**
(45) Veröffentlichungstag und Bekanntmachung des Hinweises auf die Patenterteilung: **06.01.2021**
(21) Anmeldenummer: 19161081.5
(22) Anmeldetag: 06.03.2019
(51) Int. Cl.: B61G 9/08, F16F 9/06

(54) **VORRICHTUNG ZUM ABDÄMPFEN VON DRUCKKRÄFTEN**
DEVICE FOR DAMPENING PUSH FORCES
DISPOSITIF D'AMORTISSEMENT DE FORCES DE COMPRESSION

(30) Priorität: 16.03.2018 DE 102018106157
(43) Veröffentlichungstag der Anmeldung: 18.09.2019
(73) Patentinhaber: Voith Patent GmbH, 89522 Heidenheim (DE)
(72) Erfinder: Leben, Klaus, 82335 Berg (DE); Starker, Bernhard, 86987 Schwabsoien (DE); Starker, Patrick, 86853 Schwabmühlhausen (DE)
(74) Vertreter: Rupprecht, Kay

(56) Entgegenhaltungen:
- EP-A1- 1 350 704
- EP-A1- 2 535 237
- DE-B3-102007 033 852
- US-A1- 2012 205 843

## Beschreibung

Die vorliegende Erfindung betrifft eine Vorrichtung, insbesondere gashydraulische Vorrichtung, zum Abdämpfen von Druckkräften. Gemäß Ausführungsformen der Erfindung betrifft diese insbesondere eine Vorrichtung zum Abdämpfen von Druckkräften in Form einer auch bei dynamischer Stoßbelastung reversibel ausgestalteten Stoßsicherung.

Aus der Schienenfahrzeugtechnik ist es bekannt, zwischen den einzelnen Wagenkästen eines mehrgliedrigen Fahrzeuges Stoßsicherungen, z.B. in Gestalt von sogenannten Stoßfängern, einzusetzen. Diese Bauelemente sind derart konstruiert, dass sie im Falle eines Zusammenstoßes mit einem festen oder beweglichen Hindernis, beispielsweise einem weiteren Wagenkasten, Energie aufnehmen und dadurch Beschädigungen am Fahrzeug oder der Ladung verhindern sollen. Derartige Stoßfänger finden vor allem an Schienenfahrzeugen Verwendung, wobei meistens ein oder zwei an den Stirnseiten angebrachte Konstruktionsteile eingesetzt werden, die den Zweck haben, die auf das Schienenfahrzeug in dessen Längsrichtung von außen einwirkenden waagerechten Druckkräfte aufzunehmen.

Hierbei kommen im Wesentlichen zwei Arten von Stoßfängern an Schienenfahrzeugen zum Einsatz. Sogenannte Zentralpuffer stellen eine Stoßsicherung dar, welche in der Längsachse des Fahrzeuges angeordnet sind, sodass sich an jeder Stirnseite des Schienenfahrzeuges nur ein Puffer in der Mitte der Kopfschwelle befindet. Weiterhin sind sogenannte Seitenpuffer bekannt, von denen sich jeweils zwei Puffer an der Stirnseite des Schienenfahrzeuges befinden.

Aus der Schienenfahrzeugtechnik ist es ferner bekannt, beispielsweise bei einem mehrgliedrigen Schienenfahrzeug die einzelnen Wagenkästen mit Seitenpuffern ("UIC-Puffer") auszurüsten, wenn die Wagenkästen nicht über ein Drehgestell miteinander verbunden sind und somit im Fahrbetrieb der Abstand zweier miteinander gekoppelter Wagenkästen variieren kann. Derartige Seitenpuffer dienen dazu, die im normalen Fahrbetrieb beispielsweise beim Abbremsen auftretenden Stöße aufzunehmen und abzudämpfen.

Um sowohl ein gutes Einfederverhalten des Puffers bei quasistatischem Einfedern als auch bei dynamischer Beanspruchung zu erreichen, ist es bekannt, sogenannte gashydraulische Dämpfungseinrichtungen einzusetzen, welche aus einer Kombination einer Gasdruckfeder mit einem hydraulischen Überströmsystem bestehen.

Bei statischem bzw. quasistatischem Einfedern eines solchen herkömmlichen gashydraulischen Puffers wird Füllgas, in der Regel Stickstoff, innerhalb des Gasdruckfederteils des Puffers komprimiert und erzeugt so eine Gegenkraft auf den Pufferteller. Bei Nachlassen der von außen auf den Puffer einwirkenden Kraft bewirkt die Gasfeder somit durch anschließende Expansion des Füllgases den sogenannten Rückhub, also Wiederausfedern des Puffers.

Bei dynamischer Beanspruchung eines solchen herkömmlichen gashydraulischen Dämpfers sorgt zusätzlich durch einen Drosselspalt strömendes Hydrauliköl bzw. anderweitige Hydraulikflüssigkeit dafür, dass durch den während des Strömungsvorganges auftretenden Druckabfall über dem Drosselspalt eine einer dynamischen Kraftkurve folgende hydraulische Gegenkraft erzeugt wird, welche gegen die die Einfederung bewirkende Stoßkraft wirkt.

Ein derartiger gashydraulischer Dämpfer, wie er beispielsweise auch in der Druckschrift EP 2 535 237 A1 detailliert beschrieben ist, weist jedoch den Nachteil auf, dass die Bauteilgröße insbesondere eines äußeren Zylinders des Puffers und eines inneren Zylinders (Gasdruckfederteil) des Puffers jeweils den notwendigen Hub aufgrund einer Energieaufnahme angepasst werden muss, sodass der gashydraulische Dämpfer insgesamt konstruktionsgemäß eine relativ schwere und große Bauform aufweist.

Die Druckschrift US 2012/205843 A1 betrifft eine Vorrichtung zum Abdämpfen von Druckkräften nach dem Oberbegriff des unabhängigen Patentanspruchs 1.

Die Druckschrift EP 1 350 704 A1 betrifft einen Zug-/Druckpuffer für Anhängevorrichtungen an Schienen- und Radfahrzeugen. Der aus diesem Stand der Technik bekannte Zug-/Druckpuffer weist ein Gehäuse und ein einseitig aus diesem herausragendes Kolbenelement auf, welches aus einer Nullstellung heraus jeweils gegen den Wiederstand einer Federeinrichtung und einer Dämpfungseinrichtung in zwei Richtungen bewegbar ist. Zur Dämpfung sämtlicher Bewegungen des Kolbenelements relativ zu dem Gehäuse ist eine einheitliche hydraulische Dämpfungseinrichtung vorgesehen, welche einen das Kolbenelement umgebenden ringförmigen hydraulischen Arbeitsraum umfasst, der durch einen fest mit dem Kolbenelement verbundenen und in dem hydraulischen Arbeitsraum dichtend verschiebbar geführten Ringkolben in eine erste Funktionskammer und eine zweite Funktionskammer unterteilt wird, wobei die beiden Funktionskammern über wenigstens einen Überströmkanal miteinander in Verbindung stehen.

Demgemäß liegt der vorliegenden Erfindung die Aufgabe zugrunde, eine Dämpfungsvorrichtung der eingangs genannten Art anzugeben, welche - im Vergleich zu den zuvor beschriebenen, aus dem Stand der Technik bekannten gashydraulischen Dämpfern - eine kompakte und leichte Bauform aufweist.

Diese Aufgabe wird durch den Gegenstand des unabhängigen Patentanspruchs 1 gelöst, wobei vorteilhafte Weiterbildungen der erfindungsgemäßen Vorrichtung in den abhängigen Ansprüchen angegeben sind.

Demgemäß weist die erfindungsgemäße Vorrichtung, insbesondere gashydraulische Vorrichtung, ein Gehäuse auf, in welchem eine zumindest bereichsweise hohlzylindrische Ausnehmung ausgebildet ist. Das Gehäuse kann beispielsweise als äußerer Zylinder ausgebildet sein. Die in dem Gehäuse ausgebildete Ausnehmung teilt sich in einen ersten Bereich mit einem ersten Innendurchmesser und in mindestens einen weiteren, zweiten Bereich mit einem im Hinblick auf den ersten Innendurchmesser kleineren zweiten Innendurchmesser auf.

Die erfindungsgemäße Vorrichtung weist ferner einen Kolben auf, der in dem ersten Bereich der Ausnehmung des Gehäuses aufgenommen und in dem ersten Bereich relativ zu dem Gehäuse in Längsrichtung der Ausnehmung verschiebbar, insbesondere verschiebbar gelagert ist.

Darüber hinaus ist eine Kolbenstange vorgesehen, die zumindest bereichsweise in dem zweiten Bereich der Ausnehmung des Gehäuses aufgenommen ist. Die Kolbenstange ist über ihren dem Kolben zugewandten Endbereich mit dem Kolben verbunden. Darüber hinaus ist erfindungsgemäß vorgesehen, dass die Kolbenstange zumindest in einem dem Kolben zugewandten Endbereich einen Hohlraum aufweist, welcher über einen in dem Kolben vorgesehenen Durchgang mit einem von dem ersten Bereich der Ausnehmung und dem Kolben definierten Hohlraum in Fluidverbindung steht.

Die erfindungsgemäße Lösung zeichnet sich insbesondere dadurch aus, dass in der Kolbenstange ein Dämpfungsmechanismus integriert ist, um eine Bewegung des Kolbens relativ zu dem Gehäuse insbesondere sowohl bei einer Einfahrbewegung in als auch bei einer Ausfahrbewegung aus dem Gehäuse abzudämpfen. Hierbei ist insbesondere vorgesehen, dass die Kolbenstange zumindest bereichsweise und vor allem in dem Bereich des Hohlraumes das Gehäuse des Dämpfungsmechanismus bildet.

Gemäß der vorliegenden Erfindung ist vorgesehen, dass das Gehäuse der gashydraulischen Vorrichtung ein "Federgehäuse" bildet und zumindest bereichsweise den Kolben aufnimmt. In dem Kolben selber ist ein Dämpfungsmechanismus integriert, wobei hier die zumindest bereichsweise hohlförmig ausgebildete Kolbenstange das Gehäuse des Dämpfungsmechanismus bildet.

Auf diese Weise ist eine besonders kompakte und leichte Bauform der erfindungsgemäßen Vorrichtung realisierbar. Dadurch, dass in der Kolbenstange zugleich der Dämpfungsmechanismus bzw. Dämpfer integriert ist, wird kein zusätzliches Gehäuse für den Dämpfer/Dämpfungsmechanismus benötigt, was erhebliche Materialeinsparung im Vergleich zu aus dem Stand der Technik bekannten Vorrichtung bedeutet. Auch kann die bei den herkömmlichen Vorrichtungen in der Regel vorgesehene Ringfeder eingespart werden, was zusätzliche Masse und Kosten senkt.

Im Unterschied zu dem Zug-/Druckpuffer der in der Beschreibungseinleitung bereits genannten Druckschrift EP 1 350 704 A1 zeichnet sich die im unabhängigen Patentanspruch 1 geforderte Abdämpfvorrichtung dadurch aus, dass bei der erfindungsgemäßen Lösung der Dämpfungsmechanismus bzw. Dämpfer als fester Bestandteil einer Mittelpufferkupplung als Zug-/Druckvorrichtung zum Einsatz kommt, und zwar im Unterschied zu einem integrierten autarken Dämpfelement zur Aufnahme von Druckkräften, infolgedessen mit der erfindungsgemäßen Lösung erhebliche Gewichtseinsparungen erzielt werden können.

Bei einer denkbaren Realisierung der erfindungsgemäßen Vorrichtung ist vorgesehen, dass sich zumindest in einem eingefahrenen oder zumindest teilweise in den ersten Bereich der Ausnehmung eingefahrenen Zustand des Kolbens ein zumindest bereichsweise die Kolbenstange umgebender Ringraum ausbildet bzw. ein zumindest bereichsweise die Kolbenstange umgebender Ringraum vorliegt, dessen Volumen bei einer Bewegung des Kolbens relativ zu dem Gehäuse variiert. Dieser Ringraum steht über mindestens einen vorzugsweise in der Wandung der Kolbenstange vorgesehenen Durchgang mit dem zumindest in dem dem Kolben zugewandten Endbereich der Kolbenstange vorgesehenen Hohlraum in Fluidverbindung.

Hierbei handelt es sich um eine mögliche Realisierung des zumindest bereichsweise in der Kolbenstange integrierten Dämpfungsmechanismus, wobei allerdings selbstverständlich Variationen hiervon denkbar sind.

Zumindest in einem eingefahrenen oder zumindest teilweise in den ersten Bereich der Ausnehmung eingefahrenen Zustand des Kolbens bildet sich ein zumindest bereichsweise die Kolbenstange umgebender Ringraum aus bzw. liegt ein zumindest bereichsweise die Kolbenstange umgebender Ringraum vor, dessen Volumen bei einer Bewegung des Kolbens relativ zu dem Gehäuse variiert. Dieser Ringraum steht über mindestens einen vorzugsweise in der Wandung der Kolbenstange vorgesehenen Durchgang mit dem zumindest in dem dem Kolben zugewandten Endbereich der Kolbenstange vorgesehenen Hohlraum in Fluidverbindung.

Die erfindungsgemäße Dämpfungsvorrichtung zeichnet sich durch ihre kompakte und leichte Bauform aus, da in der Kolbenstange zugleich der Dämpfer integriert ist, infolge dessen kein zusätzliches Gehäuse für den Dämpfer benötigt wird, was Material-, Masse- und Kosteneinsparung bedeutet.

Gemäß einem Aspekt der Erfindung ist in diesem Zusammenhang insbesondere vorgesehen, dass die hohlzylindrische Ausnehmung mit dem ersten und zweiten Bereich derart in einer zumindest bereichsweise hohlen Kupplungsstange ausgebildet ist, dass die Kupplungsstange das Gehäuse der Vorrichtung zum Abdämpfen von Druckkräften bildet.

Die Erfindung betrifft ferner eine Verwendung der erfindungsgemäßen Vorrichtung als ein in einer Kupplungsstange integrierter Dämpfer, wobei die Kupplungsstange zumindest bereichsweise als Hohlkörper ausgeführt ist, und wobei die hohlzylindrische Ausnehmung der Vorrichtung mit dem ersten und zweiten Bereich derart in der zumindest bereichsweisen hohlen Kupplungsstange ausgebildet ist, dass die Kupplungsstange das Gehäuse der Vorrichtung zum Abdämpfen von Druckkräften bildet.

Weitere Vorteile der erfindungsgemäßen Vorrichtung ergeben sich anhand der Beschreibung der in den Zeichnungen gezeigten exemplarischen Ausführungsformen der erfindungsgemäßen Vorrichtung.

In den Zeichnungen zeigen:
- FIG. 1: schematisch und in einer Längsschnittansicht eine erste exemplarische Ausführungsform der erfindungsgemäßen Vorrichtung in einer Nullstellung;
- FIG. 2: schematisch und in einer Längsschnittansicht die erste exemplarische Ausführungsform der erfindungsgemäßen Vorrichtung in einem eingefahrenen Zustand;
- FIG. 3: schematisch und in einer Längsschnittansicht ein Detail der ersten exemplarischen Ausführungsform der erfindungsgemäßen Vorrichtung gemäß FIG. 2;
- FIG. 4: schematisch und in einer Längsschnittansicht ein weiteres Detail der ersten exemplarischen Ausführungsform der erfindungsgemäßen Vorrichtung gemäß FIG. 2;
- FIG. 5: schematisch und in einer Längsschnittansicht eine zweite exemplarische Ausführungsform der erfindungsgemäßen Vorrichtung in einer Nullstellung;
- FIG. 6: schematisch und in einer Längsschnittansicht die zweite exemplarische Ausführungsform der erfindungsgemäßen Vorrichtung in einem eingefahrenen Zustand; und
- FIG. 7: schematisch und in einer Längsschnittansicht die zweite exemplarische Ausführungsform der erfindungsgemäßen Vorrichtung in einem zugbeanspruchten Zustand.

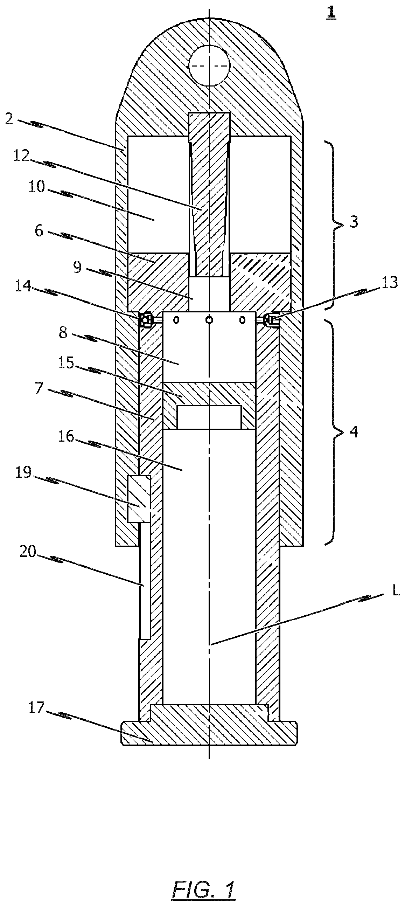

Nachfolgend wird zunächst unter Bezugnahme auf die Darstellungen in den FIGS. 1 bis 4 eine erste exemplarische Ausführungsform der erfindungsgemäßen Vorrichtung 1 näher beschrieben.

Wie dargestellt, weist die erste exemplarische Ausführungsform der erfindungsgemäßen Vorrichtung 1 ein Gehäuse 2 auf, in welchem eine zumindest bereichsweise hohlzylindrische Ausnehmung ausgebildet ist, wobei sich diese Ausnehmung aufteilt in einen ersten Bereich 3 mit einem ersten Innendurchmesser und in einen zweiten Bereich 4 mit einem zweiten Innendurchmesser, wobei der erste Innendurchmesser größer als der zweite Innendurchmesser ist.

Insbesondere ist bei der in den Zeichnungen dargestellten exemplarischen Ausführungsform der erfindungsgemäßen Vorrichtung 1 vorgesehen, dass die hohlzylindrische Ausnehmung mit dem ersten und zweiten Bereich 3, 4 derart in einer zumindest bereichsweise hohlen Kupplungsstange ausgebildet ist, dass die Kupplungsstange das Gehäuse 2 der Vorrichtung 1 zum Abdämpfen von Druckkräften bildet.

Mit anderen Worten, die in den Zeichnungen dargestellte exemplarische Ausführungsform der erfindungsgemäßen Vorrichtung 1 wird insbesondere als ein in einer Kupplungsstange integrierter Dämpfer verwendet, wobei die Kupplungsstange zumindest bereichsweise als Hohlkörper ausgeführt ist, und wobei die hohlzylindrische Ausnehmung der Vorrichtung 1 mit dem ersten und zweiten Bereich 3, 4 derart in der zumindest bereichsweisen hohlen Kupplungsstange ausgebildet ist, dass die Kupplungsstange das Gehäuse 2 der Vorrichtung 1 zum Abdämpfen von Druckkräften bildet.

Wie es den Zeichnungen ferner entnommen werden kann, ist in dem ersten Bereich 3 der Ausnehmung ein Kolben 6 aufgenommen und dort relativ zu dem Gehäuse 2 in Längsrichtung L der Ausnehmung verschiebbar. Eine Kolbenstange 7 ist über ihren den Kolben 6 zugewandten Endbereich mit dem Kolben 6 verbunden und zumindest bereichsweise in dem zweiten Bereich 4 der Ausnehmung aufgenommen. Die Kolbenstange 7 weist in einem dem Kolben zugewandten Endbereich einen Hohlraum 8 auf, welcher über einen in dem Kolben 6 vorgesehenen Durchgang 9 mit einem von dem ersten Bereich 3 der Ausnehmung und dem Kolben 6 definierten Hohlraum in Fluidverbindung steht.

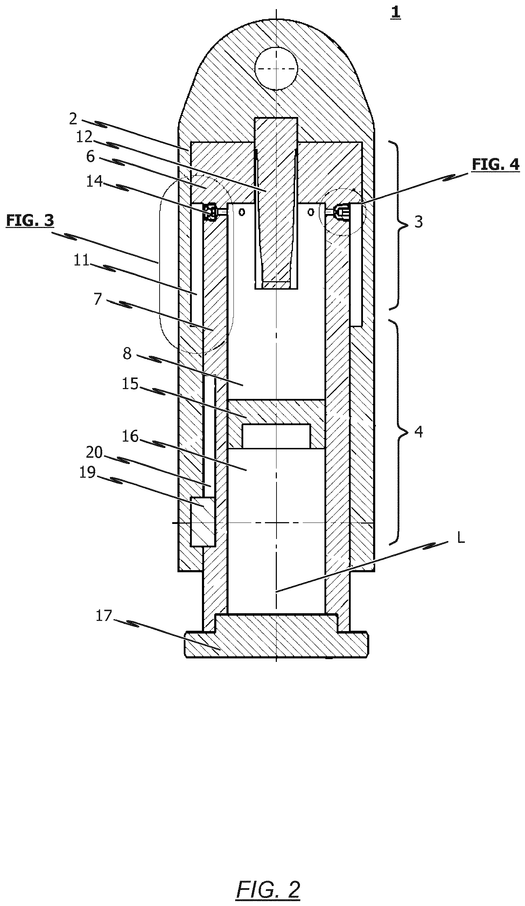

Zumindest in einem eingefahrenen oder zumindest teilweise in den ersten Bereich 3 der Ausnehmung eingefahrenen Zustand des Kolbens 6 (vgl. FIG. 2) bildet sich ein zumindest bereichsweise die Kolbenstange 7 umgebender Ringraum 11 aus bzw. liegt ein zumindest bereichsweise die Kolbenstange 7 umgebender Ringraum 11 vor, dessen Volumen bei einer Bewegung des Kolbens 6 relativ zu dem Gehäuse 2 variiert, wie es unmittelbar einer Zusammenschau der in FIG. 1 und FIG. 2 gezeigten Darstellungen entnommen werden kann.

Der Ringraum 11 ist über mindestens einen in der exemplarischen Ausführungsform gemäß FIG. 1 in der Wandung der Kolbenstange 7 vorgesehenen Durchgang mit dem in dem dem Kolben 6 zugewandten Endbereich der Kolbenstange 7 vorgesehenen Hohlraum 8 in Fluidverbindung.

Bei der in den Zeichnungen gezeigten exemplarischen Ausführungsform der erfindungsgemäßen Vorrichtung 1 ist der von dem ersten Bereich 3 der Ausnehmung und dem Kolben 6 definierte Hohlraum 10 sowie die weiteren mit diesem Hohlraum 10 in Fluidverbindung stehenden Räume (Hohlraum 8 und Ringraum 11) mit einem vorzugsweise zumindest im Wesentlichen nicht-komprimierbaren Fluid, insbesondere Öl (Hydrauliköl) gefüllt.

Ferner ist ein Drosseldorn 12 vorgesehen, welcher bei einer Bewegung des Kolbens 6 relativ zu dem Gehäuse 2 in den ersten Bereich 3 der Ausnehmung hinein zumindest bereichsweise in den in dem Kolben 6 vorgesehenen Durchgang 9 hineinfährt und so einen von dem Durchgang 9 bereitgestellten effektiven Strömungsquerschnitt reduziert.

Wie es den Zeichnungen entnommen werden kann, ist bei der exemplarischen Ausführungsform der erfindungsgemäßen Vorrichtung 1 vorgesehen, dass der Drosseldorn zumindest bereichsweise insbesondere eine kegelstumpfförmige Geometrie mit einem in Richtung der Kolbenstange 7 abnehmenden Durchmesser aufweist.

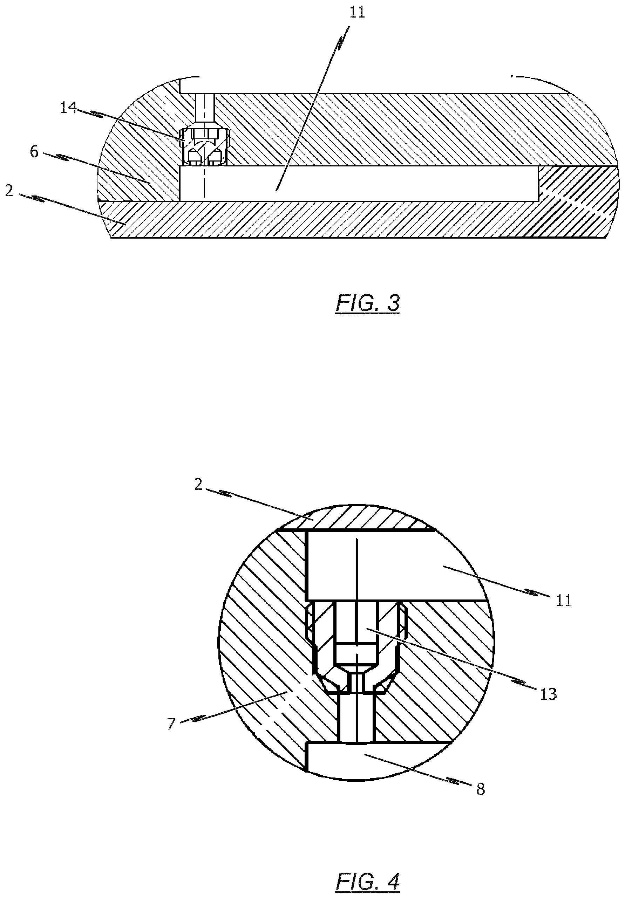

Wie es insbesondere den Detailansichten in FIG. 3 und FIG. 4 entnommen werden kann, ist bei der in den Zeichnungen gezeigten exemplarischen Ausführungsform der erfindungsgemäßen Vorrichtung 1 vorgesehen, dass der Ringraum 11 über eine in der Wandung der Kolbenstange vorgesehene Fluiddrossel 13 mit dem in dem dem Kolben 6 zugewandten Endbereich der Kolbenstange 7 vorgesehenen Hohlraum 8 in Fluidverbindung steht. Darüber hinaus ist vorgesehen, dass der Ringraum 11 über mindestens ein in der Wandung der Kolbenstange 7 vorgesehenes Rückschlagventil 14 mit dem in dem dem Kolben 6 zugewandten Endbereich der Kolbenstange 7 vorgesehenen Hohlraum 8 in Fluidverbindung steht, wobei dieses mindestens eine Rückschlagventil 14 einen Fluidübertritt von dem Ringraum 11 zu dem in dem Kolben 6 zugewandten Endbereich der Kolbenstange 7 vorgesehenen Hohlraum 8 sperrt.

Die Kolbenstange 7 ist in vorteilhafter Weise zumindest bereichsweise als vorzugsweise geschlossener Hohlkörper ausgeführt, welchem eine vorzugsweise in dem Hohlkörper vorgesehene verschiebbare Abtrennung 15 (Trennkolben) zugeordnet ist, über welche der Hohlkörper unterteilt wird in den bereits genannten, in dem dem Kolben 6 zugewandten Endbereich der Kolbenstange 7 ausgebildeten Hohlraum 8 und in einen hiervon vorzugsweise hermetisch über den Trennkolben 15 getrennten und dem Kolben 7 abgewandten Hohlraum 16.

Vorzugsweise ist dieser dem Kolben 6 abgewandte Hohlraum 16 mit einem komprimierbaren Fluid, insbesondere einem gasförmigen Fluid, wie beispielsweise Stickstoff, gefüllt.

Bei der exemplarischen Ausführungsform der erfindungsgemäßen Vorrichtung 1, wie sie in den Zeichnungen dargestellt wird, ist vorgesehen, dass die Kolbenstange 7 relativ zu der Abtrennung 15 in Längsrichtung L der in dem Gehäuse 2 ausgebildeten Ausnehmung verschiebbar ist. Sobald die Kolbenstange 7 im Gehäuse 2 verschoben wird, wird die als Trennkolben ausgeführte Abtrennung 15 zwangsläufig relativ zu dem Gehäuse 2 um das veränderte Hubvolumen verschoben.

Ferner ist bei der exemplarischen Ausführungsform der erfindungsgemäßen Vorrichtung 1 vorgesehen, dass der dem Kolben 6 abgewandte Hohlraum 16 über eine an einem dem Kolben 6 abgewandten Endbereich der Kolbenstange 7 vorgesehene Prallplatte 17 begrenzt wird. Über diese Prallplatte 17 sind von der Vorrichtung 1 abzudämpfende Druckkräfte in die Kolbenstange 7 einleitbar.

Zwischen dem ersten und dem zweiten Bereich 3, 4 der Ausnehmung ist ein ringförmiger, insbesondere kreisringförmiger Stufenbereich vorgesehen, wobei in einer Nullstellung der Vorrichtung 1, wenn - wie in FIG. 1 angedeutet - keine abzudämpfenden Druckkräfte über die Kolbenstange 7 eingeleitet werden, der Kolben 6 mit seinem der Kolbenstange 7 zugewandten Endbereich an diesem Stufenbereich anstößt.

Bei der exemplarischen Ausführungsform der erfindungsgemäßen Vorrichtung 1 ist vorgesehen, dass der erste Bereich 3 der Ausnehmung eine Innenwand aufweist, die als Führungsfläche für den Kolben 6 dient. In gleicher Weise weist auch der zweite Bereich 4 der Ausnehmung eine Innenwand auf, die ebenfalls als Führungsfläche, jedoch nicht für den Kolben 6, sondern für die Kolbenstange 7 dient.

Ferner ist bei der exemplarischen Ausführungsform der erfindungsgemäßen Vorrichtung 1 eine Verdrehsicherung 19 vorgesehen, welche ausgebildet ist, ein Verdrehen der Kolbenstange 7 relativ zu dem Gehäuse 2 zu verhindern.

Eine Zusammenschau der in FIG. 1 und FIG. 2 gezeigten Zustände der erfindungsgemäßen Vorrichtung 1 zeigt, dass bei einer Bewegung des Kolbens 6 relativ zu dem Gehäuse 2 in den ersten Bereich 3 der Ausnehmung hinein das Volumen des zumindest bereichsweise die Kolbenstange 7 umgebenden Ringraumes 11 und das Volumen des in dem dem Kolben 6 zugewandten Endbereich der Kolbenstange 7 vorgesehenen Hohlraums 8 zunehmen. Andererseits nimmt bei einer Bewegung des Kolbens 6 relativ zu dem Gehäuse 2 in den ersten Bereich 3 der Ausnehmung hinein ein Volumen des von dem ersten Bereich 3 und den Kolben 6 definierten Hohlraums 10 ab, wobei diese Volumenabnahme einhergeht mit einer entsprechenden Zunahme des gemeinsam von dem Ringraum 11 und dem in dem dem Kolben 6 zugewandten Endbereich der Kolbenstange 7 vorgesehenen Hohlraum eingeschlossenen Volumens.

Bei einem Stoß auf die Prallplatte 17 wird die Kolbenstange 7 und der Kolben 6 in das Gehäuse 2 eingeschoben. Eine Fluidströmung durch den veränderbaren Querschnitt des in dem Kolben 6 vorgesehenen Durchgangs 9, d. h. der Querschnitt zwischen dem Drosseldorn 12 und dem Durchgang 9, erzeugt die geforderten Dämpfungskräfte.

Beim Einfahren des Kolbens 6 wird auf dessen Gegenseite der Ringraum (Ringspalt) zwischen dem Gehäuse 2 und der Kolbenstange 7 gebildet bzw. vergrößert. Dieser Ringraum 11 wird nahezu widerstandsfrei durch das mindestens eine Rückschlagventil 14 mit Fluid aus dem Hohlraum 8 gefüllt. Hierbei fördert die Abtrennung 15 (Trennkolben) durch den Gasdruck in dem Hohlraum 16 das Öl aus dem Hohlraum 8 (Ölreserve) in den Ringraum 11.

Im Falle eines plötzlichen Lastwechsels wird die Prallplatte 17 auf Zug belastet. Das Fluid, welches nun aus dem Ringraum 11 verdrängt werden muss, baut durch definierte Querschnitte in der Fluiddrossel 13 wieder eine Dämpfkraft in Zugrichtung auf. Infolge dessen wird ein "Zurückschlagen" der Kolbenstange 7 auf Nullposition mit den damit auftretenden Kraftspitzen wirksam verhindert.

Die erfindungsgemäße Vorrichtung 1 weist eine insbesondere kompakte und leichte Bauform im Vergleich zu bisher aus dem Stand der Technik bekannten Systemen auf. In der Kolbenstange 7 ist zugleich der Dämpfer integriert. Dadurch wird kein zusätzliches Gehäuse für den Dämpfer benötigt, was Materialeinsparung bedeutet.

Im gedrückten Dämpferzustand (vgl. FIG. 2) kann bei Lastwechsel auf Zug kein Leerhub bis auf Anschlag mehr auftreten, was eine Abrissgefahr erheblich mindert.

Die Verdrehsicherung 19 ist im Inneren der Kolbenstange 7 gelöst und wird axial in dem entsprechenden Spaltraum 20 mitverschoben.

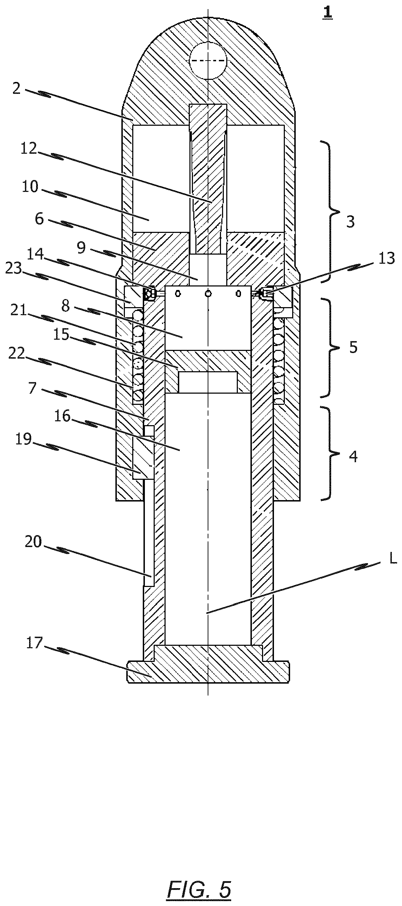

Nachfolgend wird unter Bezugnahme auf die Darstellungen in den FIGS. 5 bis 7 eine weitere exemplarische Ausführungsform der erfindungsgemäßen Vorrichtung 1 beschrieben.

Die zweite exemplarische Ausführungsform gemäß den FIGS. 5 bis 7 entspricht in struktureller und funktioneller Hinsicht im Wesentlichen der zuvor unter Bezugnahme auf die Darstellungen in den FIGS. 1 bis 4 beschriebenen ersten exemplarischen Ausführungsform. Um unnötige Wiederholungen zu vermeiden, wird nachfolgend in erster Linie nur auf die strukturellen und funktionellen Unterschiede zwischen diesen beiden Ausführungsformen eingegangen.

Im Einzelnen ist bei der zweiten exemplarischen Ausführungsform der erfindungsgemäßen Vorrichtung 1 zwischen dem ersten Bereich 3 der Ausnehmung und dem zweiten Bereich 4 der Ausnehmung ein weiterer (dritter) Bereich 5 mit einem dritten Innendurchmesser vorgesehen, wobei dieser dritte Innendurchmesser zumindest bereichsweise größer als der zweite Innendurchmesser ist.

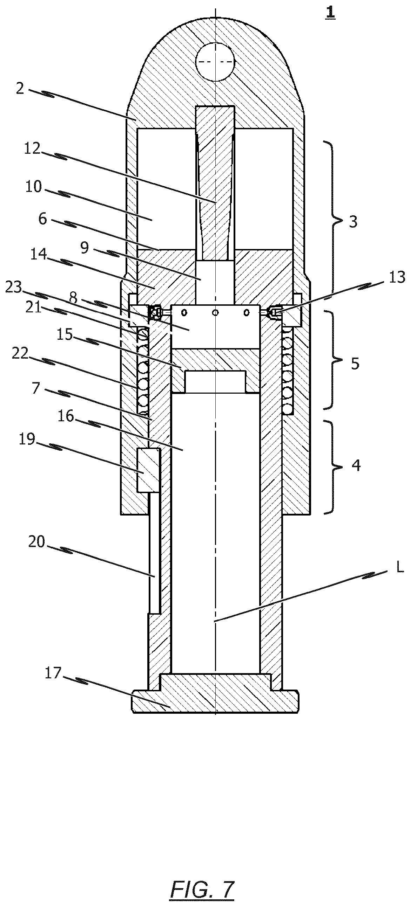

Auf diese Weise liegt auch in der Nullstellung der Vorrichtung 1 bzw. in einem zugbeanspruchten Zustand der Vorrichtung 1 (vgl. FIG. 7) ein zumindest bereichsweise die Kolbenstange 7 umgebender Ringraum 22 vor, in welchem eine Druckfeder 21 aufgenommen ist, die sich zwischen einem Federmitnehmer 23 und dem Gehäuse 2 abstützt.

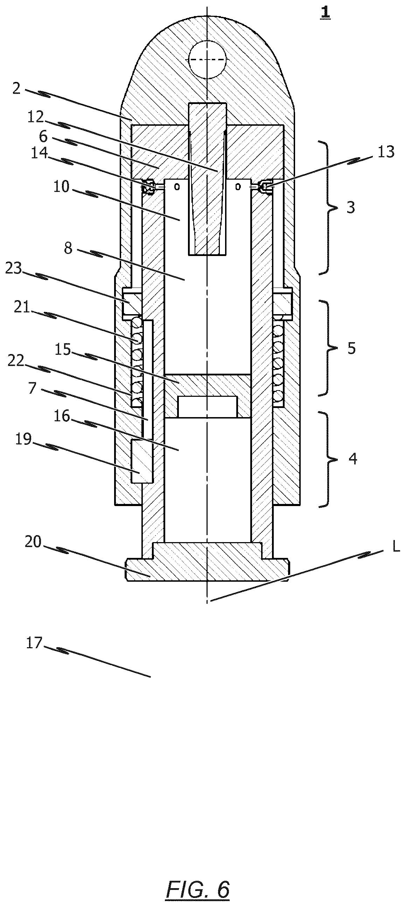

Im Einzelnen, und wie es insbesondere der Darstellung in FIG. 6 entnommen werden kann, ist der Ringraum 11, der sich ausbildet bzw. vorliegt, wenn sich der Kolben 6 in seinem zumindest teilweise in den ersten Bereich 3 der Ausnehmung des Gehäuses 2 eingefahrenen Zustand befindet (vgl. FIGS. 5 und 6), über den Federmitnehmer 23 von dem Ringraum 25, der auch in der Nullstellung bzw. in einem zugbeanspruchten Zustand der Vorrichtung 1 vorliegt (vgl. FIG. 7), räumlich getrennt. Dabei ist der Federmitnehmer 23 über eine vorab festgelegte definierte Wegstrecke relativ zu dem Gehäuse 2 und der Kolbenstange 7 in Längsrichtung L der Ausnehmung in dem Gehäuse 2 bewegbar. In der Nullstellung der Vorrichtung 1 oder zumindest in dem zugbeanspruchten Zustand der Vorrichtung 1 (vgl. FIG. 5) stößt dabei der Kolben 6 mit seinem der Kolbenstange 7 zugewandten Endbereich an den Federmitnehmer 23 an.

Das Wirkungsprinzip der zweiten exemplarischen Ausführungsform der erfindungsgemäßen Vorrichtung 1 entspricht dem zuvor unter Bezugnahme auf die Darstellungen in den FIGS. 1 bis 4 beschriebenen Wirkungsprinzip. Wenn allerdings bei der zweiten exemplarischen Ausführungsform der erfindungsgemäßen Vorrichtung 1 die Prallplatte 17 bzw. die Kolbenstange 7 auf Zug belastet wird, kann der Federmitnehmer 23 bei entsprechendem Druck im Ringraum 11 oder bei ausreichend Zugkraft des Kolbens 6 auf den Federmitnehmer 23 diesen zum Eindrücken der Druckfeder 21 bewegen. Auf diese Weise ist ein zusätzlicher Schutz in der Nulllage aufgrund von dem möglichen Zugfederweg erzielbar.

Die Erfindung ist nicht auf die in den Zeichnungen gezeigten exemplarischen Ausführungsformen beschränkt, sondern ergibt sich aus einer Zusammenschau sämtlicher hierin offenbarten Merkmale.

### Bezugszeichenliste

- 1: Vorrichtung
- 2: Gehäuse
- 3: erster Bereich der Gehäuseausnehmung
- 4: zweiter Bereich der Gehäuseausnehmung
- 5: dritter Bereich der Gehäuseausnehmung
- 6: Kolben
- 7: Kolbenstange
- 8: Hohlraum
- 9: Durchgang
- 10: Hohlraum
- 11: Ringraum
- 12: Drosseldorn
- 13: Fluiddrossel
- 14: Rückschlagventil
- 15: Abtrennung/Trennkolben (verschiebbar)
- 16: Hohlraum
- 17: Prallplatte
- 19: Verdrehsicherung
- 20: Spaltraum
- 21: Druckfeder
- 22: Ringraum
- 23: Federmitnehmer

- L: Längsrichtung der Gehäuseausnehmung

## Patentansprüche

1. Vorrichtung (1), insbesondere gashydraulische Vorrichtung (1), zum Abdämpfen von Druckkräften, wobei die Vorrichtung (1) folgendes aufweist:
- ein Gehäuse (2), in welchem eine zumindest bereichsweise hohlzylindrische Ausnehmung ausgebildet ist, wobei sich die Ausnehmung aufteilt in einen ersten Bereich (3) mit einem ersten Innendurchmesser und in mindestens einem zweiten Bereich (4) mit einem im Hinblick auf den ersten Innendurchmesser kleineren zweiten Innendurchmesser;
- ein in dem ersten Bereich (3) der Ausnehmung aufgenommenen und dort relativ zu dem Gehäuse (2) in Längsrichtung (L) der Ausnehmung verschiebbaren Kolben (6); und
- eine zumindest bereichsweise in dem zweiten Bereich (4) der Ausnehmung aufgenommene Kolbenstange (7), die über ihren dem Kolben (6) zugewandten Endbereich mit dem Kolben (6) verbunden ist und zumindest in einem dem Kolben (6) zugewandten Endbereich einen Hohlraum (8) aufweist, welcher über einen in dem Kolben (6) vorgesehenen Durchgang (9) mit einem an dem ersten Bereich (3) der Ausnehmung und dem Kolben (6) definierten Hohlraum (10) in Fluidverbindung steht,
wobei in der Kolbenstange (7) ein Dämpfungsmechanismus integriert ist zum Abdämpfen einer Bewegung des Kolbens (6) relativ zu dem Gehäuse (2), insbesondere sowohl bei einer Einfahrbewegung in als auch bei einer Ausfahrbewegung aus dem Gehäuse (2), wobei die Kolbenstange (7) zumindest bereichsweise, und insbesondere in dem Bereich des Hohlraumes (8), das Gehäuse des Dämpfungsmechanismus bildet,
**dadurch gekennzeichnet, dass**
auch in einer Nullstellung der Vorrichtung (1), wenn keine abzudämpfenden Druckkräfte über die Kolbenstange (7) eingeleitet werden, zwischen dem ersten und zweiten Bereich (3, 4) der Ausnehmung ein zumindest bereichsweise die Kolbenstange (7) umgebender Ringraum (22) vorliegt, wobei eine Druckfeder (21) vorgesehen ist, welche zumindest bereichsweise in diesem Ringraum (22) aufgenommen ist und sich zwischen einem Federmitnehmer (23) und dem Gehäuse (2) abstützt.

2. Vorrichtung (1) nach Anspruch 1,
wobei zumindest in einem eingefahrenen oder zumindest teilweise in den ersten Bereich (3) der Ausnehmung eingefahrenen Zustand des Kolbens (6) sich ein zumindest bereichsweise die Kolbenstange (7) umgebender Ringraum (11) ausbildet bzw. vorliegt, dessen Volumen bei einer Bewegung des Kolbens (6) relativ zu dem Gehäuse (2) variiert, wobei der Ringraum (11) über mindestens einen vorzugsweise in der Wandung der Kolbenstange (7) vorgesehenen Durchgang (9) mit dem zumindest in dem dem Kolben (6) zugewandten Endbereich der Kolbenstange (7) vorgesehenen Hohlraum (8) in Fluidverbindung steht.

3. Vorrichtung (1) nach Anspruch 1 oder 2,
wobei die Kolbenstange (7) zumindest bereichsweise als vorzugsweise geschlossener Hohlkörper ausgeführt ist, welchem ein vorzugsweise in dem Hohlkörper vorgesehener verschiebbarer Trennkolben (15) zugeordnet ist, über die der Hohlkörper unterteilt wird in den in dem dem Kolben (6) zugewandten Endbereich ausgebildeten Hohlraum (8) und in einen hiervon vorzugsweise hermetisch getrennten und dem Kolben (6) abgewandten Hohlraum (16).

4. Vorrichtung (1) nach Anspruch 3,
wobei die Kolbenstange (7) relativ zu der Abtrennung (15) in Längsrichtung (L) der in dem Gehäuse (2) ausgebildeten Ausnehmung verschiebbar ist.

5. Vorrichtung (1) nach Anspruch 3 oder 4,
wobei der dem Kolben (6) abgewandte Hohlraum (16) begrenzt wird über eine an einem dem Kolben (6) angewandten Endbereich der Kolbenstange (7) vorgesehene Prallplatte (17), über welche von der Vorrichtung (1) abzudämpfende Druckkräfte in die Kolbenstange (7) einleitbar sind.

6. Vorrichtung (1) nach einem der Ansprüche 3 bis 5,
wobei der dem Kolben (6) abgewandte Hohlraum (16) mit einem komprimierbaren Fluid, insbesondere gasförmigen Fluid gefüllt ist.

7. Vorrichtung (1) nach einem der Ansprüche 1 bis 6,
wobei zumindest der von dem ersten Bereich (3) der Ausnehmung und dem Kolben (6) definierte Hohlraum (10) mit einem vorzugsweise zumindest im Wesentlichen nicht-komprimierbaren Fluid, insbesondere Öl gefüllt ist.

8. Vorrichtung (1) nach einem der Ansprüche 1 bis 7,
wobei ein Drosseldorn (12) vorgesehen ist, welcher bei einer Bewegung des Kolbens (6) relativ zu dem Gehäuse (2) in den ersten Bereich (3) der Ausnehmung hinein zumindest bereichsweise in den dem Kolben (6) vorgesehenen Durchgang (9) hineinfährt und so einen von dem Durchgang (9) bereitgestellten effektiven Strömungsquerschnitt reduziert.

9. Vorrichtung (1) nach Anspruch 8,
wobei der Drosseldorn (12) zumindest bereichsweise insbesondere eine kegelstumpfförmige Geometrie mit einem in Richtung der Kolbenstange (7) abnehmenden Durchmesser aufweist.

10. Vorrichtung (1) nach einem der Ansprüche 1 bis 9,
wobei der Ringraum (11) über mindestens eine vorzugsweise in der Wandung der Kolbenstange (7) vorgesehene Fluiddrossel (13) mit dem zumindest in dem dem Kolben (6) zugewandten Endbereich der Kolbenstange (7) vorgesehenen Hohlraum (8) in Fluidverbindung steht.

11. Vorrichtung (1) nach einem der Ansprüche 1 bis 10,
wobei der Ringraum (11) über mindestens ein vorzugsweise in der Wandung der Kolbenstange (7) vorgesehenes Rückschlagventil (14) mit dem zumindest in dem dem Kolben (6) zugewandten Endbereich der Kolbenstange (7) vorgesehenen Hohlraum (8) in Fluidverbindung steht, wobei das mindestens eine Rückschlagventil (14) einen Fluidübertritt an dem Ringraum (11x) zu dem mindestens in dem dem Kolben (6) zugewandten Endbereich der Kolbenstange (7) vorgesehenen Hohlraum (8) sperrt.

12. Vorrichtung (1) nach einem der Ansprüche 1 bis 11,
wobei bei einer Bewegung des Kolbens (6) relativ zu dem Gehäuse (2) in den ersten Bereich (3) der Ausnehmung hinein das Volumen des zumindest bereichsweise die Kolbenstange (7) umgebenden Ringraumes (11) und das Volumen des in dem dem Kolben (6) zugewandten Endbereich der Kolbenstange (7) vorgesehenen Hohlraums (8) zunehmen.

13. Vorrichtung (1) nach Anspruch 12,
wobei bei einer Bewegung des Kolbens (6) relativ zu dem Gehäuse (2) in den ersten Bereich (3) der Ausnehmung hinein ein Volumen des von dem ersten Bereich (3) der Ausnehmung und dem Kolben (6) definierten Hohlraums (10) abnimmt, wobei die Volumenabnahme einhergeht mit einer entsprechenden Zunahme des gemeinsam von dem Ringraum (11) und dem in dem dem Kolben (6) zugewandten Endbereich der Kolbenstange (7) vorgesehenen Hohlraum (8) eingeschlossenen Volumens.

14. Vorrichtung (1) nach einem der Ansprüche 1 bis 13,
wobei der erste Bereich (3) der Ausnehmung eine Innenwand aufweist, die als Führungsfläche für den Kolben (6) dient, und wobei der zweite Bereich (4) der Ausnehmung eine Innenwand aufweist, die als Führungsfläche für die Kolbenstange (7) dient.

15. Vorrichtung (1) nach einem der Ansprüche 1 bis 14,
wobei zwischen dem ersten und dem zweiten Bereich (3, 4) der Ausnehmung ein ringförmiger, insbesondere kreisringförmiger Stufenbereich vorgesehen ist, wobei in einer Nullstellung der Vorrichtung (1), wenn keine abzudämpfenden Druckkräfte über die Kolbenstange (7) eingeleitet werden, der Kolben (6) mit seinem der Kolbenstange (7) zugewandten Endbereich an den Stufenbereich anstößt.

16. Vorrichtung (1) nach einem der Ansprüche 1 bis 14,
wobei sich die Ausnehmung in dem Gehäuse (2) in den ersten Bereich (3) mit dem ersten Innendurchmesser, den zweiten Bereich (4) mit dem zweiten Innendurchmesser und mindestens einen dritten Bereich (5) mit einem dritten Innendurchmesser aufteilt, wobei der mindestens eine dritte Bereich (5) vorzugsweise zwischen dem ersten und dem zweiten Bereich (3, 4) angeordnet ist, und wobei der dritte Innendurchmesser gleichgroß wie oder größer als der zweite Innendurchmesser ist.

17. Vorrichtung (1) nach einem der Ansprüche 1 bis 16,
wobei der Ringraum (11), der sich ausbildet bzw. vorliegt, wenn sich der Kolben (6) in seinem zumindest teilweise in den ersten Bereich (3) der Ausnehmung des Gehäuses eingefahrenen Zustand befindet, über den Federmitnehmer (23) von dem Ringraum (22), der auch in der Nullstellung der Vorrichtung (1) vorliegt, räumlich getrennt ist.

18. Vorrichtung (1) nach einem der Ansprüche 1 bis 17,
wobei der Federmitnehmer (23) über eine vorab festgelegte definierte Wegstrecke relativ zu dem Gehäuse (2) und der Kolbenstange (7) in Längsrichtung (L) der Ausnehmung in dem Gehäuse (2) bewegbar ist, und wobei in der Nullstellung der Vorrichtung (1) der Kolben (6) mit seinem der Kolbenstange (7) zugewandten Endbereich an den Federmitnehmer (23) anstößt.

19. Vorrichtung (1) nach einem der Ansprüche 1 bis 18,
wobei ferner eine Verdrehsicherung (19) vorgesehen ist, welche ausgebildet ist, ein Verdrehen der Kolbenstange (7) relativ zu dem Gehäuse (2) zu verhindern.

20. Vorrichtung (1) nach einem der Ansprüche 1 bis 19,
wobei die hohlzylindrische Ausnehmung mit dem ersten und zweiten Bereich (3, 4) derart in einer zumindest bereichsweise hohlen Kupplungsstange ausgebildet ist, dass die Kupplungsstange das Gehäuse (2) der Vorrichtung (1) zum Abdämpfen von Druckkräften bildet.

21. Verwendung der Vorrichtung (1) nach einem der Ansprüche 1 bis 20 als ein in einer Kupplungsstange integrierter Dämpfer, wobei die Kupplungsstange zumindest bereichsweise als Hohlkörper ausgeführt ist, und wobei die hohlzylindrische Ausnehmung der Vorrichtung (1) mit dem ersten und zweiten Bereich (3, 4) derart in der zumindest bereichsweisen hohlen Kupplungsstange ausgebildet ist, dass die Kupplungsstange das Gehäuse (2) der Vorrichtung (1) zum Abdämpfen von Druckkräften bildet.

## Claims

1. A device (1), in particular a gas-hydraulic device (1), for dampening push forces, wherein the device (1) comprises the following:
- a housing (2) in which an at least partially hollow cylindrical recess is formed, wherein the recess is divided into a first region (3) having a first internal diameter and at least one second region (4) having a second internal diameter which is smaller with respect to the first internal diameter;
- a piston (6) accommodated in the first region (3) of the recess and displaceable therein in the longitudinal direction (L) of the recess relative to the housing (2); and
- a piston rod (7) at least partially accommodated in the second region (4) of the recess which is connected to the piston (6) through an end region facing the piston (6) and comprises a hollow space (8) at least in an end region facing the piston (6) which is in fluid communication with a hollow space (10) defined on the first region (3) of the recess and the piston (6) through a passageway (9) provided in the piston (6);
wherein a damping mechanism is integrated into the piston rod (7) for dampening a movement of the piston (6) relative to the housing (2), in particular both during a retracting movement into as well as during an extending movement out of the housing (2), wherein the piston rod (7) at least partially, and in particular in the area of the hollow space (8), forms the housing of the damping mechanism,
**characterized in that**
an annular space (22) at least partially surrounds the piston rod (7) between the first and second region (3, 4) of the recess even in a neutral position of the device (1), when no push forces to be dampened are being introduced via the piston rod (7), wherein a compression spring (21) at least partially accommodated in said annular space (22) and supported between a spring engager (23) and the housing (2) is provided.

2. The device (1) according to claim 1,
wherein an annular space (11) at least partially surrounding the piston rod (7) is formed or respectively present at least in a retracted or at least partially retracted state of the piston (6) into the first region (3) of the recess, the volume of which varies upon movement of the piston (6) relative to the housing (2), wherein the annular space (11) is in fluid communication with the hollow space (8) provided at least in the end region of the piston rod (7) facing the piston (6) through at least one passageway (9) preferably provided in the wall of the piston rod (7).

3. The device (1) according to claim 1 or 2,
wherein the piston rod (7) is designed at least partially as a preferably closed hollow body allocated a displaceable separating piston (15) preferably provided in the hollow body, via which the hollow body is divided into in the hollow space (8) formed in the end region facing the piston (6) and a hollow space (16) preferably hermetically separated therefrom and facing away from the piston (6).

4. The device (1) according to claim 3,
wherein the piston rod is (7) is displaceable relative to the separation (15) in the longitudinal direction (L) of the recess formed in the housing (2).

5. The device (1) according to claim 3 or 4,
wherein the hollow space (16) facing away from the piston (6) is limited by a baffle plate (17) provided on an end region of the piston rod (7) applied to the piston (6), by means of which push forces to be dampened by the device (1) can be introduced into the piston rod (7).

6. The device (1) according to one of claims 3 to 5,
wherein the hollow space (16) facing away from the piston (6) is filled with a compressible fluid, in particular gaseous fluid.

7. The device (1) according to one of claims 1 to 6,
wherein at least the hollow space (10) defined by the first region (3) of the recess and the piston (6) is filled with preferably an at least substantially non-compressible fluid, in particular oil.

8. The device (1) according to one of claims 1 to 7,
wherein a throttle pin (12) is provided which, when the piston (6) moves relative to the housing (2) into the first region (3) of the recess, at least partially enters the passageway (9) provided in the piston (6) and thus reduces an effective flow cross-section provided by the passageway (9).

9. The device (1) according to claim 8,
wherein the throttle pin (12) in particular exhibits an at least partially frustoconical geometry of decreasing diameter toward the piston rod (7).

10. The device (1) according to one of claims 1 to 9,
wherein the annular space (11) is in fluid communication with the hollow space (8) provided at least in the end region of the piston rod (7) facing the piston (6) via at least one fluid throttle (13) preferably provided in the wall of the piston rod (7).

11. The device (1) according to one of claims 1 to 10,
wherein the annular space (11) is in fluid communication with the hollow space (8) provided at least in the end region of the piston rod (7) facing the piston (6) via at least one check valve (14) preferably provided in the wall of the piston rod (7), wherein the at least one check valve (14) blocks passage of fluid at the annular space (11x) to the hollow space (8) provided at least in the end region of the piston rod (7) facing the piston (6).

12. The device (1) according to one of claims 1 to 11,
wherein upon a movement of the piston (6) relative to the housing (2) into the first region (3) of the recess, the volume of the annular space (11) at least partially surrounding the piston rod (7) and the volume of the hollow space (8) provided in the end region of the piston rod (7) facing the piston (6) increase.

13. The device (1) according to claim 12,
wherein upon a movement of the piston (6) relative to the housing (2) into the first region (3) of the recess, a volume of the hollow space (10) defined by the first region (3) of the recess and the piston (6) decreases, wherein the volume decrease is accompanied by a corresponding increase in the volume collectively enclosed by the annular space (11) and the hollow space (8) provided in the end region of the piston rod (7) facing the piston (6).

14. The device (1) according to one of claims 1 to 13,
wherein the first region (3) of the recess has an inner wall which serves as a guide surface for the piston (6), and wherein the second region (4) of the recess has an inner wall which serves as a guide surface for the piston rod (7).

15. The device (1) according to one of claims 1 to 14,
wherein an annular, in particular toroidal step region is provided between the first and the second region (3, 4) of the recess, wherein the end region of the piston (6) facing the piston rod (7) butts against the step region in a neutral position of the device (1) when no push forces to be dampened are being introduced via the piston rod (7).

16. The device (1) according to one of claims 1 to 14,
wherein the recess in the housing (2) is divided into the first region (3) having the first internal diameter, the second region (4) having the second internal diameter and at least one third region (5) having a third internal diameter, wherein the at least one third region (5) is preferably arranged between the first and the second region (3, 4), and wherein the third internal diameter is of equal or greater size than the second internal diameter.

17. The device (1) according to one of claims 1 to 16,
wherein the annular space (11) formed or respectively present when the piston (6) is in its at least partially retracted state into the first region (3) of the recess of the housing is spatially separated from the annular space (22), likewise present in the neutral position of the device (1), by the spring engager (23).

18. The device (1) according to one of claims 1 to 17,
wherein the spring engager (23) is movable over a predetermined defined distance relative to the housing (2) and the piston rod (7) in the longitudinal direction (L) of the recess in the housing (2), and wherein the end region of the piston (6) facing the piston rod (7) butts against the spring engager (23) in the neutral position of the device (1).

19. The device (1) according to one of claims 1 to 18,
wherein a rotation lock (19) designed to prevent rotation of the piston rod (7) relative to the housing (2) is further provided.

20. The device (1) according to one of claims 1 to 19,
wherein the hollow cylindrical recess with the first and second region (3, 4) is formed in an at least partially hollow coupling rod such that the coupling rod forms the housing (2) of the device (1) for dampening push forces.

21. Use of the device (1) according to one of claims 1 to 20 as a damper integrated into a coupling rod, wherein the coupling rod is designed as an at least partially hollow body, and wherein the hollow cylindrical recess of the device (1) with the first and second region (3, 4) is formed in the at least partially hollow coupling rod such that the coupling rod forms the housing (2) of the device (1) for dampening push forces.

## Revendications

1. Dispositif (1), en particulier dispositif hydraulique à gaz (1), pour l'amortissement de forces de pression, le dispositif (1) comprenant les éléments suivants :
- un boîtier (2) dans lequel est formé un évidement au moins localement cylindrique creux, l'évidement étant subdivisé en une première zone (3) ayant un premier diamètre intérieur et en au moins une seconde zone (4) ayant un second diamètre intérieur qui est inférieur au premier diamètre intérieur ;
- un piston (6) logé dans la première zone (3) de l'évidement et pouvant y être déplacé par rapport au boîtier (2) dans la direction longitudinale (L) de l'évidement ; et
- une tige de piston (7) qui est logée au moins localement dans la seconde zone (4) de l'évidement et qui est reliée au piston (6) par sa zone d'extrémité tournée vers le piston (6) et présente une cavité (8) au moins dans une zone d'extrémité tournée vers le piston (6), cavité qui est en liaison fluidique avec une cavité (10), définie sur la première zone (3) de l'évidement et sur le piston (6), via un passage (9) prévu dans le piston (6),
dans lequel
un mécanisme d'amortissement est intégré dans la tige de piston (7) pour amortir un mouvement du piston (6) par rapport au boîtier (2), en particulier aussi bien lors d'un mouvement d'entrée dans le boîtier (2) que lors d'un mouvement de sortie hors de celui-ci, la tige de piston (7) formant au moins localement, en particulier au niveau de la cavité (8), le boîtier du mécanisme d'amortissement, **caractérisé en ce que**
même dans une position zéro du dispositif (1), lorsqu'aucune force de compression à amortir n'est introduite par la tige de piston (7), un espace annulaire (22) entourant au moins localement la tige de piston (7) est présent entre la première et la seconde zone (3, 4) de l'évidement,
et il est prévu un ressort de compression (21) qui est reçu au moins localement dans cet espace annulaire (22) et qui s'appuie entre un entraîneur de ressort (23) et le boîtier (2).

2. Dispositif (1) selon la revendication 1,
dans lequel, au moins dans un état rétracté du piston (6) ou au moins partiellement rétracté dans la première zone (3) de l'évidement, un espace annulaire (11) entourant au moins localement la tige de piston (7) se forme ou se présente, dont le volume varie lorsque le piston (6) se déplace par rapport au boîtier (2), l'espace annulaire (11) étant en liaison fluidique avec la cavité (8) prévue au moins dans la zone d'extrémité de la tige de piston (7) tournée vers le piston (6) via au moins un passage (9) prévu de préférence dans la paroi de la tige de piston (7).

3. Dispositif (1) selon la revendication 1 ou 2,
dans lequel la tige de piston (7) est réalisée au moins localement comme un corps creux de préférence fermé auquel est associé un piston de séparation (15) mobile, de préférence prévu dans le corps creux, par lequel le corps creux est subdivisé en la cavité (8) formée dans la zone d'extrémité tournée vers le piston (6) et en une cavité (16) de préférence séparée hermétiquement de celle-ci et détournée du piston (6).

4. Dispositif (1) selon la revendication 3,
dans lequel la tige de piston (7) est déplaçable par rapport à la séparation (15) dans la direction longitudinale (L) de l'évidement formé dans le boîtier (2).

5. Dispositif (1) selon la revendication 3 ou 4,
dans lequel la cavité (16) détournée du piston (6) est délimitée par une chicane (17) prévue dans une zone d'extrémité de la tige de piston (7) détournée du piston (6), chicane par laquelle des forces de compression à amortir par le dispositif (1) peuvent être introduites dans la tige de piston (7).

6. Dispositif (1) selon l'une des revendications 3 à 5,
dans lequel la cavité (16) détournée du piston (6) est remplie d'un fluide compressible, en particulier d'un fluide gazeux.

7. Dispositif (1) selon l'une des revendications 1 à 6,
dans lequel au moins la cavité (10) définie par la première zone (3) de l'évidement et par le piston (6) est remplie d'un fluide de préférence au moins sensiblement incompressible, en particulier d'huile.

8. Dispositif (1) selon l'une des revendications 1 à 7,
dans lequel il est prévu un pointeau d'étranglement (12) qui, lors du mouvement du piston (6) par rapport au boîtier (2) jusque dans la première zone (3) de l'évidement, se déplace au moins localement jusque dans le passage (9) prévu pour le piston (6) et réduit ainsi une section transversale d'écoulement effective assurée par le passage (9).

9. Dispositif (1) selon la revendication 8,
dans lequel le pointeau d'étranglement (12) présente au moins localement en particulier une géométrie en forme de cône tronqué ayant un diamètre décroissant en direction de la tige de piston (7).

10. Dispositif (1) selon l'une des revendications 1 à 9,
dans lequel l'espace annulaire (11) est en liaison fluidique avec la cavité (8) prévue au moins dans la zone d'extrémité de la tige de piston (7) tournée vers le piston (6) via au moins un étranglement de fluide (13) prévu de préférence dans la paroi de la tige de piston (7).

11. Dispositif (1) selon l'une des revendications 1 à 10,
dans lequel l'espace annulaire (11) est en liaison fluidique avec la cavité (8) prévue au moins dans la zone d'extrémité de la tige de piston (7) tournée vers le piston (6) via au moins un clapet anti-retour (14) prévu de préférence dans la paroi de la tige de piston (7), et
ledit au moins un clapet anti-retour (14) bloque un transfert de fluide au niveau de l'espace annulaire (11x) vers la cavité (8) prévue au moins dans la zone d'extrémité de la tige de piston (7) tournée vers le piston (6).

12. Dispositif (1) selon l'une des revendications 1 à 11,
dans lequel, lors d'un mouvement du piston (6) par rapport au boîtier (2) jusque dans la première zone (3) de l'évidement, le volume de l'espace annulaire (11) entourant au moins localement la tige de piston (7) et le volume de la cavité (8) prévue dans la zone d'extrémité de la tige de piston (7) tournée vers le piston (6) augmentent.

13. Dispositif (1) selon la revendication 12,
dans lequel, lors d'un mouvement du piston (6) par rapport au boîtier (2) jusque dans la première zone (3) de l'évidement, un volume de la cavité (10) définie par la première zone (3) de l'évidement et par le piston (6) diminue, la diminution de volume s'accompagnant d'une augmentation correspondante du volume entouré conjointement par l'espace annulaire (11) et par la cavité (8) prévue dans la zone d'extrémité de la tige de piston (7) tournée vers le piston (6).

14. Dispositif (1) selon l'une des revendications 1 à 13,
dans lequel la première zone (3) de l'évidement présente une paroi intérieure qui sert de surface de guidage pour le piston (6), et
la seconde zone (4) de l'évidement présente une paroi intérieure qui sert de surface de guidage pour la tige de piston (7).

15. Dispositif (1) selon l'une des revendications 1 à 14,
dans lequel une zone en gradin annulaire, en particulier circulaire, est prévue entre la première et la seconde zone (3, 4) de l'évidement, et
dans une position zéro du dispositif (1), lorsqu'aucune force de compression à amortir n'est introduite par la tige de piston (7), le piston (6) bute contre sur la zone en gradin par sa zone d'extrémité tournée vers la tige de piston (7).

16. Dispositif (1) selon l'une des revendications 1 à 14,
dans lequel l'évidement dans le boîtier (2) est subdivisé en la première zone (3) ayant le premier diamètre intérieur, en la seconde zone (4) ayant le second diamètre intérieur et en au moins une troisième zone (5) ayant un troisième diamètre intérieur, et
ladite au moins une troisième zone (5) est de préférence disposée entre la première et la seconde zone (3, 4), et
le troisième diamètre intérieur est égal ou supérieur au second diamètre intérieur.

17. Dispositif (1) selon l'une des revendications 1 à 16,
dans lequel l'espace annulaire (11) qui se forme ou se présente lorsque le piston (6) est dans son état au moins partiellement rentré dans la première zone (3) de l'évidement du boîtier, est séparé spatialement de l'espace annulaire (22) présent également dans la position zéro du dispositif (1), par l'intermédiaire de l'entraîneur de ressort (23).

18. Dispositif (1) selon l'une des revendications 1 à 17,
dans lequel l'entraîneur de ressort (23) est mobile dans le boîtier (2) sur une distance définie préalablement déterminée par rapport au boîtier (2) et à la tige de piston (7) dans la direction longitudinale (L) de l'évidement du boîtier (2), et dans la position zéro du dispositif (1), le piston (6) bute contre l'entraîneur de ressort (23) par sa zone d'extrémité tournée vers la tige de piston (7).

19. Dispositif (1) selon l'une des revendications 1 à 18,
dans lequel il est en outre prévu un moyen de blocage anti-rotation (19) qui est réalisé pour empêcher la tige de piston (7) de tourner par rapport au boîtier (2).

20. Dispositif (1) selon l'une des revendications 1 à 19,
dans lequel l'évidement cylindrique creux ayant la première et la seconde zone (3, 4) est ménagé dans une tige d'accouplement au moins localement creuse de telle sorte que la tige d'accouplement forme le boîtier (2) du dispositif (1) pour l'amortissement des forces de compression.

21. Utilisation du dispositif (1) selon l'une des revendications 1 à 20 comme amortisseur intégré dans une barre d'accouplement, la barre d'accouplement étant réalisée au moins localement comme un corps creux, et l'évidement cylindrique creux du dispositif (1) ayant la première et la seconde zone (3, 4) étant ménagé dans la barre d'accouplement au moins localement creuse de telle sorte que la barre d'accouplement forme le boîtier (2) du dispositif (1) pour l'amortissement de forces de compression.
